(19) Europäisches Patentamt
European Patent Office
Office européen des brevets

(11) **EP 1 808 991 A1**

(12) **EUROPEAN PATENT APPLICATION**

(43) Date of publication:
**18.07.2007 Bulletin 2007/29**

(51) Int Cl.:
***H04L 29/06*** *(2006.01)*

(21) Application number: **06013259.4**

(22) Date of filing: **27.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.01.2006 US 306964**

• **Wu, Pei-Yeh**
**c/o ZyXEL communications Corp.**
**Hsin-Chu Hsien**
**Taiwan (TW)**
• **Lee, Hung-Wei**
**Yunghe City**
**Taipei Hsien**
**Taiwan (TW)**

(71) Applicant: **Zyxel Communications Corporation Hsien**
**Hsin chu (TW)**

(74) Representative: **Hager, Thomas Johannes**
**Hoefer & Partner**
**Patentanwälte**
**Gabriel-Max-Strasse 29**
**81545 München (DE)**

(72) Inventors:
• **Tseng, Yu-Chee**
**East District**
**Hsinchu City**
**Taiwan (TW)**

(54) **Method for etablishing a voice over IP call in a WLAN**

(57)     A method for establishing a voice over IP, VoIP, call in a wireless local-area network, WLAN, access point includes an access point (504, 506) receiving a first signal (OK, INVITE) and forwarding the first signal (OK, INVITE) to a station (502, 508). After forwarding the first signal (OK, INVITE), the access point (504, 506) receives a request (ADDTS request) from the station (502, 508). In response to the request (ADDTS request), the access point (504, 506) allocates a resource for the station (502, 508). Then, the access point (504, 506) responds to the station (502, 508) with a response (ADDTS response) indicating that the resource is allocated. Subsequent to the access point (504, 506) responding to the station (502, 508), the access point (504, 506) receives a last signal (ACK, OK) from the station (502, 508).

Fig. 5

**Description**

The present invention relates to a method for establishing a voice over IP (VoIP) call in a wireless local- area network (WLAN) access point according to the pre-characterizing clause of claim 1.

Recently, there have been two major trends in the area of communications. First, IEEE 802.11 wireless local-area networks (WLANs) have become widely deployed in the world. Second, due to the growth of Internet bandwidth, real-time audio and video applications have become more mature and more popular. The combined effect has made voice over IP (VoIP) across WLANs possible.

For example, to support VoIP, new products have appeared, such as Wi-Fi phones and dual-mode cellular-WiFi phones (e.g., CISCO Wireless IP Phone 7920 and MOTOROLA MPx). The above observation has raised an interesting issue: how do WLANs support quality of service (QoS) and call admission control (CAC) for VoIP traffic? The *IEEE 802.11 Task Group E (802.11e)* has been formed to expand the current 802.11 MAC protocol to support applications with QoS requirements. In addition, a session initiation protocol (SIP) has been widely accepted as the signaling protocol for VoIP to handle the setup, modification, and teardown of VoIP sessions.

Prior art exists that focuses on improving VoIP traffic in WLAN environments. Sachin Garg and Martin Kappes, Admission Control for VoIP Traffic in IEEE 802.11 Networks, IEEE Globecom'03, 2003 claims that admission control is critical to protect VoIP traffic because resources in a WLAN cell is limited. A channel utilization estimation (CUE) is proposed to determine whether to accept a new call. Alternatively, giving priority to VoIP traffic helps improve performance, as disclosed in Takefumi Hiraguri, Takeo Ichikawa, Masataka Iizuka, and Masahiro Morikura, Novel Multiple Access Protocol for Voice over IP in Wireless LAN, IEEE ISCC'02, 2002. Some art points out that the bottleneck is at the access point (i.e., down link traffic). In Farooq Anjum, MoncefElaoud, David Famolari, Abhrajit Ghosh, Ravichander Vaidyannthan, Ashutosh Dutta, and Prathima Ageawal, Voice Performance in WLAN Networks - An Experimental Study, IEEE Globecom'03, 2003, a BC-PQ (backoff control and priority queue (BC-PQ) mechanism is proposed to give priority to voice traffic over data traffic and assign zero backoff time to voice packets in access points. On the other hand, Jeonggyun Yu, Sunghyun Choi, and Jaehwan LEE, Enhancement of VoIP over IEEE 802. 11 WLAN via Dual Queue Strateg,. In IEEE ICC'04, 2004 proposes to separate real-time and non-real-time packets into two queues, and an access point (AP) always processes a real-time queue first whenever it is not empty. A number of concurrent VoIP sessions that can be supported in a WLAN is evaluated in Sachin Garg and Martin Kappes, Can IAdda VoIP Call ? IEEE ICC'03, 2003 and David P. Hole and Fouad A. Tobagi, Capacity of an IEEE 802.11b Wireless LAN supporting VoIP, in proc. of IEEE ICC'04, 2004. It is reported that besides the bandwidth limitation of the physical layer, the codec, packetization interval, and delay budget may all influence the number of VoIP sessions that can be supported. It is further pointed out that the selection of packetization interval has more impact than the selection of codec.

On the standardization track, the IEEE 802.11 working group R (802.11 r) is currently developing fast roaming mechanisms. Fin-Woo Jung, Ranganathan Muddumbai, Doug Montgomery, and Hyun-Kook Kahng, Performance Evaluation of Two Layered Mobility Management using Mobile IP and Session Initiation Protocol, IEEE Globecom'03, 2003 proposes a structure to integrate Mobile IP with SIP to assist VoIP mobility, while Terence D. Todd Ming He, Donhmei Zhao, and Vytas Kezys, Ad Hoc Assisted Handoff for Real-time Voice in IEEE 802.11 Infrastructure WLANs, IEEE WCNC'04, 2004 suggests using ad hoc-assisted handoff to meet the QoS requirement of VoIP during handover. IEEE 802.11e aims at enhancing its MAC mechanism to support QoS. Several works have studied using 802.11e to improve multimedia transmission under WLAN. QoS schedulers based on HCCA of IEEE 802.11e are proposed in Antonio Grilo, Mario Macedo, and Mario Nunes, A Scheduling Algorithm for QoS Support in IEEE 802.11e Networks, IEEE Wireless Communications, June 2004 and L. W. Lim, R Malik, P. Y. Tan, C. Apichaichalermwongse, K. Ando, and Y. Harada, A QoS scheduler for IEEE 802.11e WLANs, IEEE CCNC'04, 2004. Some works discuss how to ameliorate EDCA in IEEE 802.11e to facilitate multimedia transmission. Mohammad Malli, Qiang Ni, Thierry Turletti, and Chadi Brakat, Adaptive Fair Channel Allocation for QoS Enhancement in IEEE 802.11 Wireless LANs, IEEE ICC'04, 2004 extends the basic EDCA by using an adaptive fast backoff mechanism along with a window doubling mechanism at busy period. In Yang Xiao, Haizhon Li, and Sunghyun Choi, Protection and Guarantee for Voice and Video Traffic in IEEE802.11e Wireless Lans, IEEE Infocom'04, 2004, it is suggested that in EDCA each mobile station must conduct admission control on real-time traffic streams to protect existing real-time sessions, and that an AP must adjust lower-priority access categories' contention windows, arbitration inter-frame spacing (AIFS), and so forth, to protect real-time sessions from colliding by those that do not require admission control.

This in mind, the present invention aims at providing a method for establishing a VoIP call that has improved QoS over WLAN environments.

This is achieved by a method according to claim 1. The dependent claims pertain to corresponding further developments and improvements.

As will be seen more clearly from the detailed description following below, the claimed method includes an access point receiving a first signal and forwarding the first signal to a station; after forwarding the first signal, the access point receiving a request from the station; in response to the request, the access point allocating a resource for the station; the access point responding to the station with a response indicating that the resource is allocated; and subsequent to the access point responding to the station, the access point receiving a last signal from the station.

In the following, the invention is further illustrated by way of example, taking reference to the accompanying drawings. Thereof

Fig. 1 is a diagram of management of access categories in EDCA according to the related art,
Fig. 2 illustrates an EDCA parameter set information element according to the related art,
Fig. 3 illustrates a TSPEC information element according to the related art,
Fig. 4 illustrates one example of call establishment according to the prior art, and
Fig. 5 illustrates QoS architecture integrating SIP with IEEE 802.11 le according to the present invention.

802.11e MAC Protocol

The current IEEE 802.11 MAC has no means of differentiating traffic streams (TSs) or sources. All packets are treated equally in both DCF and PCF. As a result, no consideration can be made for the service requirements of traffic. The IEEE 802.11 Working Group E has proposed a hybrid coordination function (HCF) for both ad-hoc and infrastructure modes. Several enhancements are introduced in 802.11e. First, a concept called transmission opportunity (TXOP) is introduced, which is a period of time during which a quality of service (QoS) enhanced stations (QSTA-a station that supports 802.11e, such as a caller or callee) can exclusively use the wireless medium. A TXOP is defined by a starting time and a maximum duration and it can be obtained by contention or by assignment from the hybrid coordinator (HC). Second, IEEE 802.11e supports traffic differentiation by giving traffic streams priorities. Third, it allows a TS to specify its traffic characteristic.

HCF supports two access methods, a contention-based mechanism called enhanced distributed channel access (EDCA) and a contention-free mechanism called HCF controlled channel access (HCCA). Since HCCA is enhanced from PCF and PCF is seldom implemented, EDCA is of primary consideration.

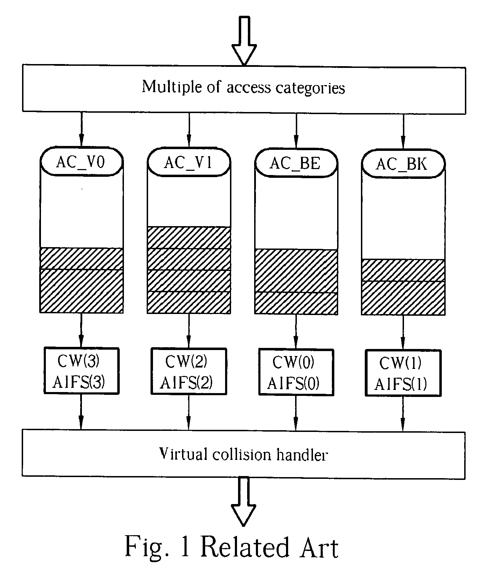

To differentiate services, IEEE 802.11e adopts the eight user priorities in 802.1D and maps then to four access categories (ACs) as shown in Table 1. EDCA supports these ACs by four separated queues in both QAP (an AP that supports 802.1 le) and QSTA, as illustrated in Fig. 1. Each queue operates as an independent entity and conducts backoff as in the original IEEE 802.11 DCF. The $i$th AC, i=0...3, has its own arbitration inter-frame space ($AIFS[i]$), initial window size ($CWmin[i]$), and maximum contention window size ($CWmax[i]$). If multiple queues finish their backoff simultaneously, a virtual collision handler will choose the AC with the highest priority to send and the lower priority AC(s) will back off as experiencing an external collision.

Table 1:

| 802.1D Priority | 802.ID Designation | 802.11e AC Index | 802.11e AC Designation | Comment |
|---|---|---|---|---|
| 1 (low) | BK | 01 | AC_BK | Background |
| 2 | - | | AC_BK | Background |
| 0 | BE | 00 | AC_BE | Best Effort |
| 3 | EE | | AC_BE | Best Effort |
| 4 | CL | 10 | AC_VI | Video |
| 5 | VI | | AC_VI | Video |
| 6 | VO | 11 | AC_VO | Voice |
| 7 (high) | NC | | AC_VO | Voice |

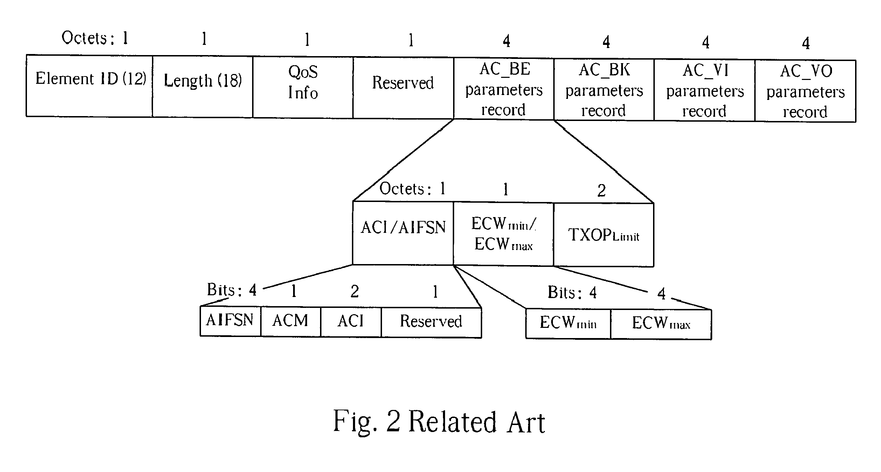

An EDCA parameter set information element, as shown in Fig. 2, can be sent in beacon frames. It also contains the TXOP limit of each AC, which bounds the amount of burst transmission of a QSTA after it successfully contends the medium. If a TXOP limit equals zero, a QSTA can transmit only one packet each time it gains the TXOP.

Admission Control in EDCA

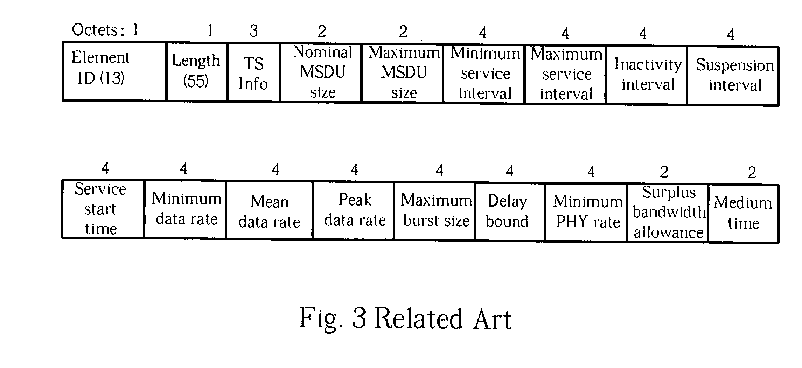

A QAP uses an admission control mandatory (ACM) subfield advertised in the EDCA parameter set to indicate whether admission control is required for each AC. A QSTA can send an add traffic stream (ADDTS) request to the QAP to request adding a new traffic stream by specifying its direction (uplink, downlink, bidirectional, or direct) and providing a traffic specification (TSPEC) information element as shown in Fig. 3. Some important fields in the TSPEC are discussed below:

Minimum Data Rate: the lowest data rate (in bits per second) to transport MSDUs.
Mean Data Rate: the average data rate (in bits per second) to transport MSDUs.
Peak Data Rate: the maximum allowable data rate (in bits per second) to transport MSDUs.
Minimum PHY Rate: the desired minimum physical rate for this traffic stream.
Medium Time: the amount of time admitted to a stream to access the medium. This field

is not used in the ADDTS request frame, but will be set by the HC in the ADDTS response frame.

On receiving an ADDTS request, the QAP may decide to accept or reject it. In the former case, the QAP will calculate a medium time (MT) for this traffic stream per beacon interval and reply with an ADDTS response containing this information; otherwise, an ADDTS response including rejection information is sent as a reply. For QAP and each QSTA, they keep the total MT and consumed MT of each AC. Only when the former is larger than the latter, can packets in the corresponding AC be transmitted. After each beacon interval, the consumed MT will be reset to zero. The QAP can identify a traffic stream by its traffic stream ID (TSID) and direction. This information is available in the TS info field in TSPEC. In this paper, we will use bidirectional reservation for voice over IP (VoIP) sessions.

SIP and SDP

Session initialization protocol (SIP) is a signaling protocol, which is considered as an attractive alternative to H.323 to support VoIP. SIP is an application-layer control protocol that can establish, modify, and terminate multimedia sessions. It often cooperates with other protocols, such as session description protocol (SDP, which is specified in RFC 2327. It does not provide a means for transporting or advertising. RFC 3264 describes how SDP co-works with SIP.) to describe session characteristics and real-time transport protocol (RTP, which is often accompanied with RTP control protocol-RTCP-to provide transport services to support real-time applications.) to send traffic after call setup.

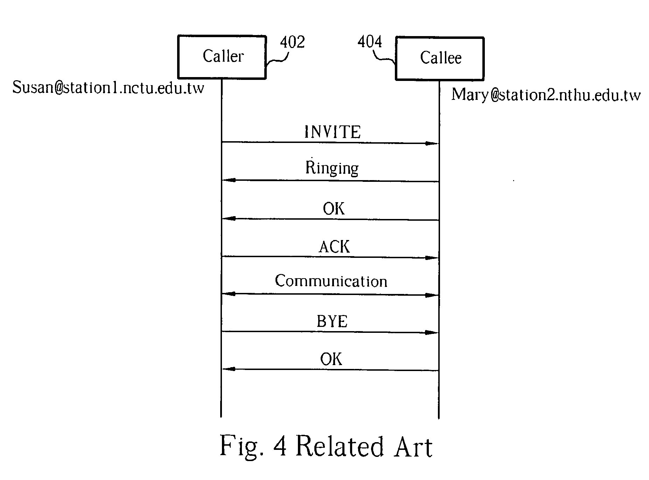

SIP is designed to keep signaling as simple as possible. Fig. 4 shows one example of call establishment. When a caller 402 wants to make a VoIP connection with a callee 404, the caller 402 sends an "INVITE" including any codecs that the caller 402 supports in a SDP message body. An example in the "INVITE" signal is shown below with G.726 (2), G.723 (4), and G.728 (15) as the selections (numbers in parentheses are payload types) and 123 as the receive port:

```
INVITE: sip: Mary@station2.nthu.edu.tw SIP/2.0
From: Caller<sip: Susan@stationl.nctu.edu.tw>; tag=abc123
To: Callee<sip: Mary@station2.nthu.edu.tw>
Cseq: 1 INVITE
Content-Type: application/sdp
Content-Disposition: session
v=0
o=Susan 123 001 IN IP4 station 1.nctu.edu.tw
s=
c=IN IP4 station 1.nctu.edu.tw
t=00
m=audio 123 RTP/AVP 24 15
a=rtpmap 2 G726-32/8000
a=rtpmap 4 G723/8000
a=rtpmap 15 G728/8000
```

If the callee 404 decides to accept the request, it replies with "Ringing" and an "OK" signal to the caller 402. The "OK" signal contains the callee's choice of codec. In the example of the "OK" signal below, the callee 404 chooses G.728 (15), using the receive port of 888, a port number of 0 indicating a rejection:

SIP/2.0 200 OK

From: Caller<sip: Susan@stationl.nctu.edu.tw>; tag=abc123

To: Callee<sip: Mary@station2.nthu.edu.tw>

Cseq: 1 INVITE

Content-Type: application/sdp

Content-Disposition: session

v=0

o=callee 456 001 IN IP4 station2.nthu.edu.tw

s=

c=IN IP4 station2.nthu.edu.tw

t=0 0

m=audio 0 RTP/AVP 2

m=audio 0 RTP/AVP 4

m=audio 888 RTP/AVP 15

**The Invention**

The present invention supports VoIP services over wireless local-area network (WLAN) environments. In particular, the present invention integrates IEEE 802.11e with SIP to conduct call admission control over WLAN environments and support QoS for VoIP calls. The present invention's cross-layer design can maintain the QoS of VoIP services. Moreover, the present invention can also increase the number of VoIP sessions supported under an access point (AP) without compromising QoS. Although the invention is described in terms of IEEE 802.11e and SIP, the improvements of the invention can be applied any VoIP system.

In the invention, SIP is used for call setup and management. A VoIP session can dynamically adjust its packetization interval (PI) even during communication, where PI represents how frequently voice data should be encapsulated into packets. The present invention aims to provide a high QoS for admitted VoIP sessions when the network load is not heavy, and to support as many VoIP connections with acceptable QoS as possible when the network load is heavy.

Call Establishment

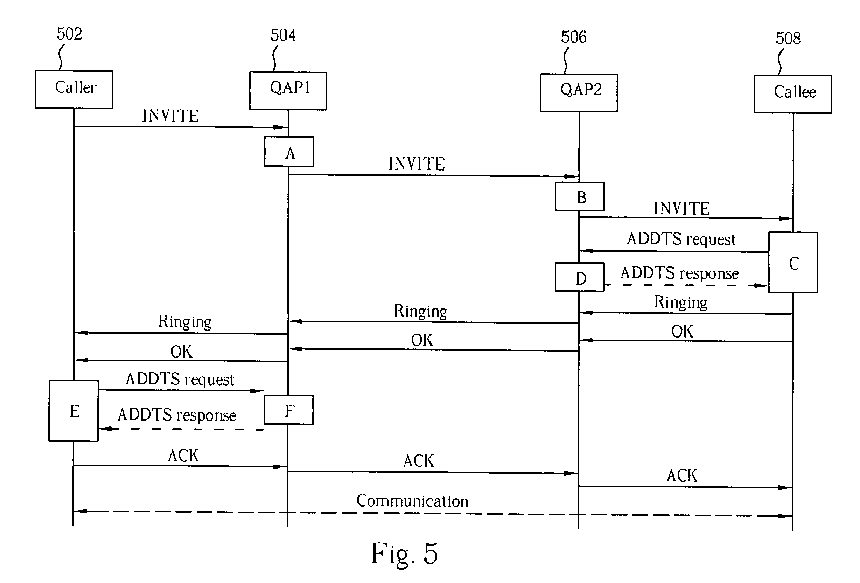

Fig. 5 illustrates QoS architecture integrating SIP with IEEE 802.11e according to the present invention. When a caller 502 under access point QAP1 504 wants to establish a VoIP connection with a callee 508 at access point QAP2 506, the caller 502 can send an "INVITE" signal with a message (e.g., an SDP message) containing necessary codec information to the callee 508. The access points QAP1 504 and QAP2 506, on receiving this "INVITE" signal (refer to steps A and B in Fig. 5, shown as boxes), do pre-resource reservation and may filter out any codecs that they cannot support due to bandwidth constraints. When the callee 508 receives this "INVITE" signal (refer to steps C and D), the callee 508 exchanges a request and a response e.g., 802.11e ADDTS request and response) with access point QAP2 506. This can prevent ghost rings (A ghost ring happens when a user can not communicate with the other party as he/she picks up a ringing phone. Shortage of bandwidth is often a reason for ghost rings in VoIP applications.). After exchanging ADDTS messages, the callee 508 can send "Ringing" and "OK" signals to the caller 502. The "OK" signal contains the codec selected by the callee 508. After receiving the "OK" signal, the caller 502 will exchange ADDTS request and response messages with access point QAP1 504 (refer to steps E and F, in Fig. 5). If these steps are successful, an "ACK" signal will be sent to from the caller 502 to the callee 508 as a reply.

In the following, the detailed actions taken at steps A, B, C, D, E, and F, shown as boxes in Fig. 5, will be explained.

Referring to step A of Fig.5, the access point QAP1 504 conducts pre-resource reservation for the caller 502. Generally, an access point (QAP) has to broadcast the physical layer (PHY) rates that it can support in its beacon frames. When a QoS enhanced station (QSTA), such as the caller 502 or callee 508, is associated with a QAP, it also registers with the QAP its supported rates. In IEEE 802.11e, a QSTA can specify its minimum PHY rate when adding a new traffic stream. When the QSTA can transmit/receive at this rate, the requested QoS should be guaranteed; otherwise, the requested QoS is not necessarily guaranteed.

To conduct pre-resource reservation according to the present invention, the access point QAP1 504 maintains a packet size table (PST) as shown below, which contains the packet sizes when different codecs and packetization intervals (PI) are used.

Table 2:

| Codec | Data Rate (kbps) | Packetization Interval (ms) | | | | |
|---|---|---|---|---|---|---|
| | | 5 | 10 | 20 | 30 | 40 |
| G.711 | 64 | 114 | 154 | 234 | 314 | 394 |
| G.726 | 16 | 84 | 94 | 114 | 134 | 154 |
| | 32 | 94 | 114 | 154 | 194 | 234 |
| G.725 | 16 | 84 | 94 | 114 | 134 | 154 |
| G.723.1 | 5.3 | - | - | - | 94 | - |
| | 6.3 | - | - | - | 98 | - |

For example, in G.726 with a sampling rate of 32 kbps, if a packetization interval of 20 ms is used, then each packet is of size 154 bytes (which contains 80 bytes of voice payload, 40 bytes of IPv4/UDP/RTP/error-checking overhead, and 34 bytes of MAC/error-checking overhead). The payload sizes generated by different codecs are well known. Note that the calculation does not include the PLCP preamble and header, which are 24 bytes and must be sent at the lowest rate of 1 Mbps. Therefore, given a codec and its packetization information, the access point QAP1 504 can compute a medium time (MT) that should be reserved for the traffic stream per beacon interval (BI) as follows:

$$MT = \text{(total time needed per BI)}$$
$$= \text{(time to send one packet)} * \text{(no. packets per BI)} * \text{(surplus bandwidth allowance)}$$
$$= [\text{(PLCP preamble and header)} + \text{payload} + SIFS + \text{ACK}]$$
$$* \text{(BI/PI)} * \text{(surplus bandwidth allowance)}$$
$$= [\text{(packet size)}=\text{(min PHY rate)} + 2 * \text{PLCP/Mbps} + \text{(ACK/min PHY rate)} + SIFS]$$
$$* (BI=PI) * \text{(surplus bandwidth allowance)} \qquad (1)$$

According to 802.11, SIFS is 10 microseconds, an "ACK" packet is 14 bytes, and the PLCP preamble and header are 24 bytes. The surplus bandwidth allowance is a value slightly larger than 1 to take into account the excess time for possible contentions and retransmissions (in a statistical sense). In the present invention, the surplus bandwidth allowance is about 1.1. For example, when BI is 1 sec and min PHY rate is I Mbps, in G.726 with 32 kbps and PI of 20 msec, then MT = [154/11 (*bytes*/*Mbps*) + 2 * 24 (*bytes*/*Mbps*) +14/11 (*bytes*=*Mbps*) + 10 microseconds] * (1000/20) * 1: 1 = 28.39 ms.

For each codec in the "INVITE" signal, if its MT exceeds the remaining MT of the access point QAP1 504, the codec is removed from the codec list. In case the remaining resource in the access point QAP1 504 does not allow the access point QAP1 504 to support any codec, the access point QAP1 504 can drop the "INVITE" signal silently or reply with an SIP response to the caller 502 with a status code of "480", which means "temporarily unavailable." Also note that since voice communications are bi-directional, the access point QAP1 504 should reserve 2* *MTmax,* where *MTmax* is the maximum time required by all codecs in the list.

Referring to step B of Fig.5, the access point QAP2 506 conducts pre-resource reservation for the callee 508. The calculation of medium time at the callee 508 when receiving the "INVITE" signal is similar to what is already described above. The access point QAP2 506 also filters out those codecs that it cannot support from the "INVITE" signal and reserves the maximum required bandwidth. The "INVITE" signal is then forwarded to the callee 508 if at least one codec can be supported.

Referring to step C of Fig.5, an ADDTS request is made by the callee 508. After determining the codec to use, the callee 508 can send a bidirectional ADDTS request (i.e., request and response) to the access point QAP2 506 by including a TSPEC element. VoIP service requirements can be conveyed with the following fields in the TSPEC element:

Minimum Data Rate = the acceptable longest packetization interval of the corresponding codec.
Mean Data Rate = the packetization interval selected by the callee 508.
Maximum Data Rate = the acceptable shortest packetization interval.

Medium Time = the codec selected by the callee 508.

With this information, the access point QAP2 506 can do call admission control as described below.

Referring to step D of Fig.5, call admission control is performed at the access point QAP2 506. According to the callee's ADDTS request and the packet size information (see Table 2), the access point QAP2 506 can compute the required medium time via Eq. (1). Note that with a bidirectional request, the same medium time should be applied to both the uplink and the downlink directions. In order to conduct call admission control, the access point QAP2 506 should maintain the following variables:

TXOPBudget[ACi]: The remaining bandwidth that can be allocated by access category $ACi$, i=0..3;

TxAdDn[ACi][TSID]: The admitted medium time for stream TSID of access category $ACi$ in the downlink direction;

TxAdUp[ACi][TSID]: The admitted medium time for stream TSID of access category $ACi$ in the uplink direction;

TxAdDn[ACi]: This value is set to $\sum_{\forall TSID} \text{TxAdDn}[ACi][\text{TSID}]$, to record the overall resource allocated to access category $ACi$ in the downlink direction; and

TxUsedDn[ACi]: The summation of used medium time of all downlink streams of access category $ACi$.

Initially, TXOPBudget[ACi] contains all the bandwidth (in terms of medium time) that is reserved for access category $ACi$. Whenever a new stream is added, the corresponding resource is subtracted from TXOPBudget[$ACi$], and the resource is assigned to TxAdDn[ACi][TSID] and/or TxAdUp[$ACi$][TSID]. In addition, each QSTA should maintain the following variables:

TxAdUp[ACi][TSID]: The admitted medium time for stream TSID of access category $ACi$ in the uplink direction in this station (STA) per beacon interval (BI);

TxAdUp[ACi]: This value is set to $\sum_{\forall TSID} \text{TxAdUp}[ACi][\text{TSID}]$, to record the overall resource allocated to access category $ACi$ of this STA in the uplink direction; and

TxUsedUp[$ACi$]: The summation of used medium time of all uplink streams of access category $ACi$.

Resource reservation at QAP2 is done as follows. First, the value of TXOPBudget[ACi] - 2*MT is computed. If the value is non-negative, there is sufficient resource to support this call the following can be set:

TXOPBudget[$ACi$] = TXOPBudget[$ACi$] - 2*MT;

TxAdDn[$ACi$][TSID] = MT;

TxAdUp[$ACi$][TSID] = MT; and

TxAdDn[$ACi$] = TxAdDn[$ACi$] + TxAdDn[$ACi$][TSID].

where MT is computed from Eq. (1) based on the information of codec, PI, min PHY rate, etc., provided by the TSPEC. If there is insufficient resource, the QAP can choose the next larger PI (if possible), re-compute a new MT, and repeat the above testing, until a satisfactory PI is found. Thus, the access point QAP2 506 will reply with an ADDTS response to the callee 508 with a "Mean Data Rate" = PI and a "Medium Time" = MT in the TSPEC. If there is insufficient resource, then an ADDTS response is sent in reply with "Medium Time" = 0.

At the callee's side, if an ADDTS response with a positive "Medium Time" is received, then the QSTA sets its TxAdUp[$ACi$][TSID] = "Medium Time" and retrieves the PI in the "Mean Data Rate" field and passes it to the upper layer VoIP application program. Otherwise, the call is considered rejected. In both cases, the callee 508 should reply with a response signal, that is the "OK" signal, having the proper status code to the caller 502.

Referring to step E of Fig.5, the caller 502 performs an ADDTS request. When the caller 502 receives the "OK" signal with codec information from the callee 508, the caller 502 sends an ADDTS request to the access point QAP1 504. This is similar to the process at the callee 508 described with reference to step C, and further description is omitted.

Referring to step E of Fig.5, the access point QAP1 504 performs call admission control. This action is similar to the call admission control performed at the access point QAP2 506 described with reference to step D. If the caller 502 receives a successful ADDTS response, the caller 502 will send an "ACK" signal to the callee 508. Then, the voice communication can be started. Because of the pre-resource reservation in steps A and B, a lot of potential ghost rings can be avoided. Also, voice quality can be guaranteed because of the call admission control in steps D and F. Finally, although it is assumed that both the caller 502 and the callee 508 are under WLANs, the above procedure should work well if any side is not under a WLAN.

Resource Readjustment During Transmission

The above steps are for the setup of new calls. However, during transmissions, a stream may dynamically change its bandwidth requirement. In this subsection, the steps to be taken alleviate such problems are introduced.

Regarding estimation of downlink PI by the access points QAP1 504 and QAP2 506, the PI selected by a codec is not conveyed via SIP signals to the codec at the other side. Therefore, although the resource reservation mentioned above in the uplink direction (from the caller 502 or the callee 508 to access point QAP1 504 or QAP2 506, respectively) is accurate, the MT reserved for the downlink direction is only an approximation. To solve this problem for each stream TSID, the access point QAP1 504 or QAP2 506 is required to observe packets from the other side for several beacon intervals and estimate the actual PI being used. After estimating the actual PI, the access point QAP1 504 or QAP2 506 should calculate the MT according to Eq. (1) for this stream and then update TxAdDn[AC VO][TSID] and TxAdDn[AC VO].

Regarding adjustment for PHY rate change at QSTAs (i.e., caller 502 and callee 508), when a traffic stream finds that its admitted medium time is not enough to send all of its packets because its physical rate drops below its specified min PHY rate, the QSTA can send an updated ADDTS request to its QAP with the min PHY rate field equal to its current PHY rate or below. The operations are similar to the above steps C and D. The QAP may respond in two ways: by allocating more medium time for the stream if it still has more resource available, or by suggesting a longer PI to reduce the required medium time of the corresponding traffic stream. If the request succeeds, a new medium time will be sent in reply; otherwise, the QAP will reply with the stream's original medium time. In the latter case, the call may suffer from lower quality.

Regarding mechanisms to support more VoIP sessions, when a WLAN is very congested or when there are more new VoIP calls required to join the WLAN, resource consumption of current calls can be reduced. In such a situation, a QAP (i.e., access point QAP1 504 or QAP2 506) can send a beacon frame by carrying such a notification to its QSTAs (i.e., caller 502 or callee 508). A QSTA may respond in two ways:

The QSTA may change the PI of one of its streams by notifying the corresponding codec as well as sending a new ADDTS request to the QAP with a longer PI. The QAP should grant the ADDTS request; or

The QSTA may decide to ask one of its streams to change to a lighter-load codec. This can be achieved by the "RE-INVITE" or "UPDATE" signal of SIP.

The present invention provides a way to enhance the performance of VoIP services by integrating the SIP call setup signaling and the 802.11e QoS mechanism. It should be noted that each of the access points QAP1 504 and QAP2 506 can include all of the functionality described above. That is, each access point QAP1 504 and QAP2 506 can handle one or more callers and/or callees in any combination.

**Claims**

1. A method for establishing a voice over IP, VoIP, call in a wireless local-area network, WLAN, access point **characterised by**:

    an access point (504, 506) receiving a first signal (OK, INVITE) and forwarding the first signal (OK, INVITE) to a station (502, 508);
    after forwarding the first signal (OK, INVITE), the access point (504, 506) receiving a request (ADDTS request) from the station (502, 508);
    in response to the request (ADDTS request), the access point (504, 506) allocating a resource for the station (502, 508);
    the access point (504, 506) responding to the station (502, 508) with a response (ADDTS response) indicating that the resource is allocated; and
    subsequent to the access point (504, 506) responding to the station (502, 508), the access point (504, 506) receiving a last signal (ACK, OK) from the station (502, 508).

2. The method of claim 1, **characterised in that** the first signal (INVITE) is an invite signal generated by a caller (502) and sent to the access point (506) via an access point (504) in communication with the caller (502), the station (508) is a callee, and the last signal is an OK signal (OK).

3. The method of claim 2 further **characterised by** the access point (506) performing pre-resource reservation in response to the invite signal (INVITE).

4. The method of claim 2 further **characterised by** the access point (506) filtering out a communication codec identified in the invite signal (INVITE) before forwarding the invite signal (INVITE) to the station (508).

5. The method of claim 2, **characterised in that** the invite signal (INVITE) forwarded to the station (508) identifies at least one communication codec, the method further comprising the access point (506) loading a communication codec identified in the request (ADDTS request) from the station (508).

6. The method of claim 1, **characterised in that** the first signal (OK) is an OK signal generated by a callee (508) and sent to the access point (504) via an access point (506) in communication with the callee (508), the station (502) is a caller, and the last signal is an acknowledgement signal (ACK).

7. The method of claim 6 further **characterised by** the access point (504) loading a communication codec identified in the request (ADDTS request).

8. The method of claim 6 further **characterised by** the access point (504) performing pre-resource reservation in response to an invite signal (INVITE) received from the station (502).

9. The method of claim 1, 2, 3, 4, 5, 6, 7, or 8, **characterised in that** the request (ADDTS request) includes a proposed packetization interval of the station (502, 508).

10. The method of claim 9, **characterised in that** the response (ADDTS response) includes a packetization interval selected by the access point (504, 506).

11. The method of claim 1, 2, 3, 4, 5, 6, 7, 8, 9, or 10, **characterised in that** the access point (504, 506) allocating a resource for the station (502, 508) comprises the access point (504, 506) performing a call admission control process.

12. The method of claim 1, 2, 3, 4, 5, 6, 7, 8, 9, 10, or 11, **characterised in that** the resource comprises a bandwidth or a medium time.

Multiple of access categories

AC_V0 AC_V1 AC_BE AC_BK

CW(3)
AIFS(3)

CW(2)
AIFS(2)

CW(0)
AIFS(0)

CW(1)
AIFS(1)

Virtual collision handler

Fig. 1 Related Art

| Octets: 1 | 1 | 1 | 1 | 4 | 4 | 4 | 4 |
|---|---|---|---|---|---|---|---|
| Element ID (12) | Length (18) | QoS Info | Reserved | AC_BE parameters record | AC_BK parameters record | AC_VI parameters record | AC_VO parameters record |

| Octets: 1 | 1 | 2 |
|---|---|---|
| ACI/AIFSN | ECWmin/ ECWmax | TXOPLimit |

| Bits: 4 | 1 | 2 | 1 |
|---|---|---|---|
| AIFSN | ACM | ACI | Reserved |

| Bits: 4 | 4 |
|---|---|
| ECWmin | ECWmax |

Fig. 2 Related Art

| Octets: 1 | 1 | 3 | 2 | 2 | 4 | 4 | 4 | 4 |
|---|---|---|---|---|---|---|---|---|
| Element ID (13) | Length (55) | TS Info | Nominal MSDU size | Maximum MSDU size | Minimum service interval | Maximum service interval | Inactivity interval | Suspension interval |

| 4 | 4 | 4 | 4 | 4 | 4 | 4 | 2 | 2 |
|---|---|---|---|---|---|---|---|---|
| Service start time | Minimum data rate | Mean data rate | Peak data rate | Maximum burst size | Delay bound | Minimum PHY rate | Surplus bandwidth allowance | Medium time |

Fig. 3 Related Art

Caller  402        404  Callee

Susan@station1.nctu.edu.tw        Mary@station2.nthu.edu.tw

INVITE

Ringing

OK

ACK

Communication

BYE

OK

Fig. 4 Related Art

502  504  506  508

| Caller | QAP1 | QAP2 | Callee |

INVITE

A

INVITE

B

INVITE

ADDTS request

C

D  ADDTS response

Ringing

Ringing

Ringing

OK

OK

OK

ADDTS request

E  F

ADDTS response

ACK

ACK

ACK

Communication

Fig. 5

EP 1 808 991 A1

**European Patent Office**

# EUROPEAN SEARCH REPORT

Application Number

EP 06 01 3259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/043266 A (KONINKL PHILIPS ELECTRONICS NV [NL]) 22 May 2003 (2003-05-22) * page 1, line 1 - page 23, line 21; figures 1,9-12 * | 1-12 | INV. H04L29/06 |
| A | US 2005/276237 A1 (SEGAL NIRANJAN N [US] ET AL) 15 December 2005 (2005-12-15) * paragraph [0010] - paragraph [0054] * | 1-12 | |
| A | LAN/MAN STANDARDS COMMITTEE: "Local and metropolitan area networks - Specific requirements" INTERNET CITATION, [Online] 11 November 2005 (2005-11-11), pages 1-209, XP002429954 Retrieved from the Internet: URL:http://standards.ieee.org/reading/ieee/std/lanman/restricted/802.11e-2005.pdf> [retrieved on 2007-04-17] * paragraph [009.] - paragraph [9.9.3.2.] * * paragraph [10.3.24.1] - paragraph [10.3.24.3] * | 1-12 | |
| | | | **TECHNICAL FIELDS SEARCHED (IPC)** H04L |
| A | CAMARILLO G ET AL: "Integration of Resource Management and Session Initiation Protocol (SIP)" IETF STANDARD, INTERNET ENGINEERING TASK FORCE, IETF, CH, October 2002 (2002-10), pages 1-30, XP015009089 ISSN: 0000-0003 * paragraph [003.] - paragraph [004.] * | 1-12 | |

The present search report has been drawn up for all claims

| Place of search | Date of completion of the search | Examiner |
|---|---|---|
| Munich | 22 May 2007 | Günther, Steffen |

EPO FORM 1503 03.82 (P04C01)

## ANNEX TO THE EUROPEAN SEARCH REPORT
## ON EUROPEAN PATENT APPLICATION NO.

EP 06 01 3259

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2007

| Patent document cited in search report | | Publication date | Patent family member(s) | | Publication date |
|---|---|---|---|---|---|
| WO 03043266 | A | 22-05-2003 | CN | 1586055 A | 23-02-2005 |
| | | | EP | 1449330 A1 | 25-08-2004 |
| | | | JP | 2005510131 T | 14-04-2005 |
| | | | US | 2003093526 A1 | 15-05-2003 |
| US 2005276237 | A1 | 15-12-2005 | EP | 1759541 A2 | 07-03-2007 |
| | | | WO | 2006001959 A2 | 05-01-2006 |

For more details about this annex : see Official Journal of the European Patent Office, No. 12/82

## REFERENCES CITED IN THE DESCRIPTION

**Non-patent literature cited in the description**

- **SACHIN GARG ; MARTIN KAPPES.** Admission Control for VoIP Traffic in IEEE 802.11 Networks. *IEEE Globecom'03,* 2003
- **TAKEFUMI HIRAGURI ; TAKEO ICHIKAWA ; MASATAKA IIZUKA ; MASAHIRO MORIKURA.** Novel Multiple Access Protocol for Voice over IP in Wireless LAN. *IEEE ISCC'02,* 2002
- **FAROOQ ANJUM ; MONCEFELAOUD ; DAVID FAMOLARI ; ABHRAJIT GHOSH ; RAVICHANDER VAIDYANNTHAN ; ASHUTOSH DUTTA ; PRATHIMA AGEAWAL.** Voice Performance in WLAN Networks - An Experimental Study. *IEEE Globecom'03,* 2003
- **JEONGGYUN YU ; SUNGHYUN CHOI ; JAEHWAN LEE.** Enhancement of VoIP over IEEE 802. 11 WLAN via Dual Queue Strateg. *IEEE ICC'04,* 2004
- **SACHIN GARG ; MARTIN KAPPES.** Can IAdda VoIP Call. *IEEE ICC'03,* 2003
- **DAVID P. HOLE ; FOUAD A. TOBAGI.** Capacity of an IEEE 802.11b Wireless LAN supporting VoIP. *proc. of IEEE ICC'04,* 2004
- **FIN-WOO JUNG ; RANGANATHAN MUDDUMBAI ; DOUG MONTGOMERY ; HYUN-KOOK KAHNG.** Performance Evaluation of Two Layered Mobility Management using Mobile IP and Session Initiation Protocol. *IEEE Globecom'03,* 2003
- **TERENCE D. TODD MING HE ; DONHMEI ZHAO ; VYTAS KEZYS.** Ad Hoc Assisted Handoff for Real-time Voice in IEEE 802.11 Infrastructure WLANs. *IEEE WCNC'04,* 2004
- **ANTONIO GRILO ; MARIO MACEDO ; MARIO NUNES.** A Scheduling Algorithm for QoS Support in IEEE 802.11e Networks. *IEEE Wireless Communications,* June 2004
- **L. W. LIM ; R MALIK ; P. Y. TAN ; C. APICHAICHALERMWONGSE ; K. ANDO ; Y. HARADA.** A QoS scheduler for IEEE 802.11e WLANs. *IEEE CCNC'04,* 2004
- **MOHAMMAD MALLI ; QIANG NI ; THIERRY TURLETTI ; CHADI BRAKAT.** Adaptive Fair Channel Allocation for QoS Enhancement in IEEE 802.11 Wireless LANs. *IEEE ICC'04,* 2004
- **YANG XIAO ; HAIZHON LI ; SUNGHYUN CHOI.** Protection and Guarantee for Voice and Video Traffic in IEEE802.11e Wireless Lans. *IEEE Infocom'04,* 2004